# EUROPÄISCHE PATENTSCHRIFT

(11) **EP 3 844 862 B1**
(45) Veröffentlichungstag und Bekanntmachung des Hinweises auf die Patenterteilung: **27.04.2022**
(21) Anmeldenummer: 20819632.9
(22) Anmeldetag: 12.11.2020
(51) Int. Cl.: H02K 15/00, B21F 11/00, B23D 15/10

(54) **VORRICHTUNG ZUM ABLÄNGEN VON IN EINEM STATORKERN AUFGENOMMENEN LEITERSTÜCKEN**
DEVICE FOR CUTTING TO LENGTH CONDUCTOR PIECES RECEIVED IN A STATOR CORE
DISPOSITIF POUR METTRE À LONGUEUR DES PIÈCES CONDUCTRICES LOGÉES DANS UN NOYAU STATORIQUE

(30) Priorität: 12.11.2019 DE 102019130533
(43) Veröffentlichungstag der Anmeldung: 07.07.2021
(73) Patentinhaber: Gehring Technologies GmbH + Co. KG, 73760 Ostfildern (DE)
(72) Erfinder: BÄDER, Christoph, 73776 Altbach (DE)
(74) Vertreter: DREISS Patentanwälte PartG mbB
(86) Internationale Anmeldenummer: PCT/EP2020/081856
(87) Internationale Veröffentlichungsnummer: WO 2021/094425

(56) Entgegenhaltungen:
- DE-A1- 10 361 844
- US-A1- 2003 233 747
- US-A1- 2006 267 440
- US-A1- 2017 264 155

## Beschreibung

Die Erfindung betrifft eine Vorrichtung zum Ablängen von in einem Statorkern aufgenommenen Leiterstücken.

Bei der sogenannten Hairpin-Technologie werden im weitesten Sinne haarnadelförmige Leiterstücke (Hairpins) zusammen mit einzelnen andersartigen Sonderpins in einen Statorkern eingesetzt. Hairpins sind dabei Leiterstücke mit im Wesentlichen zwei länglich erstreckten Schenkeln und einem diese beiden Schenkel verbindenden Verbindungsabschnitt. Die Vielzahl an Leiterstücken ist dabei üblicherweise derart angeordnet, dass die Leiterstücke auf mehreren in einer Umfangsrichtung verlaufenden Kreisbahnen in Reihen, die jeweils in einer Radialrichtung erstreckt sind, angeordnet sind. Dabei ragen die freien Enden der Schenkel auf einer Seite des Statorkerns aus diesem hinaus und die Verbindungsabschnitte sind auf der anderen Seite des Statorkerns angeordnet.

Nach dem Einsetzen werden die freien Enden in Umfangsrichtung verdreht bzw. verbogen, wobei dieser Schritt auch als "Twisten" bezeichnet wird. Dabei werden einzelne Hairpins (allgemein Leiterstücke bzw. deren freie Enden) im Uhrzeigersinn und andere gegen den Uhrzeigersinn in Umfangsrichtung verdreht. Typischerweise werden die freien Schenkel der Hairpins, die Leiterstücke, derart verdreht, dass sie nach dem Verdrehen in einer direkt benachbarten Reihe oder einer übernächsten Reihe angeordnet sind (denkbar ist auch, dass weitere Reihen übersprungen werden) oder zwischen zwei ursprünglichen Reihen mit anderen Leiterstücken aus ursprünglich anderen Reihen angeordnet sind. Das Twisten wird beispielsweise mittels konzentrisch zueinander angeordneten Zylindern, die rotierbar sind, durchgeführt, wobei jeweils Leiterstücke, die auf einer Kreisbahn angeordnet sind, in einem Zylinder in entsprechenden Aufnahmen aufgenommen sind. Das Verdrehen der Zylinder zueinander verbiegt die Leiterstücke auf benachbarten Kreisbahnen bspw. in unterschiedliche Richtungen.

Vor dem Twisten kann es gewünscht sein die Hairpins radial auswärts zu biegen.

Im Anschluss an das Twisten werden die Hairpins üblicherweise abgelängt (auf eine vorgesehene Länge gekürzt) und anschließend bestimmte Hairpins/Leiterstücke bzw. deren freie Enden miteinander verschweißt, um so die Wicklungen des Stators zu bilden. Um die Hairpins zu kürzen und für den Verschweißvorgang zu Maskieren (hierdurch wird verhindert, dass heißes Material in den Stator gelangt), wird häufig eine plattenartige Abdeckung mit Ausnehmungen auf die freien Enden aufgesetzt, so dass die freien Enden in den Ausnehmungen angeordnet sind. Beim Ablängen werden dann mittels eines Hobels die über die Abdeckung hinausstehenden freien Enden abgetrennt.

Aus den folgenden Druckschriften US 2017/0264155 A1, US 2006/0267440 A1, DE 103 61 844 A1, US 2003/0233747 A1 sind Schneiden und Scheren zum Trennen und Ablängen bekannt.

Es ist Aufgabe der vorliegenden Erfindung, eine Vorrichtung zum Ablängen von in einem Statorkern aufgenommenen Leiterstücken, insbesondere Hairpins, zur Verfügung zu stellen, die diesen Vorgang möglichst präzise und mit geringem Risiko einer Beschädigung der Leiterstücke durchführt.

Gelöst wird die Aufgabe durch eine Vorrichtung nach Anspruch 1, wobei die Vorrichtung umfasst:
Eine Aufnahme, zum Aufnehmen eines Statorkerns und der darin aufgenommenen Leiterstücke. Im aufgenommenen Zustand ragen dabei die im Statorkern angeordneten Leiterstücke mit ihren freien Enden aus dem Statorkern heraus.

Mindestens eine Ablängeinheit mit mindestens zwei Schneidenabschnitten. Dabei sind die Schneidenabschnitte reversibel aufeinander zu bewegbar, um einen Schneidvorgang durchführen zu können. Die Schneidenabschnitte wirken zum Durchführen eines Schneidvorgangs von zwei gegenüberliegenden Seiten her auf mindestens ein Leiterstück und dessen Längsachse, bzw. auf ein freies Ende mindestens eines Leiterstücks und dessen Längsachse, ein.

Die Ablängeinheit umfasst zwei Schneidenarme. Diese sind in einem gemeinsamen Schneidenschwenkpunkt schwenkbar gelagert und in diesem miteinander verbunden. Jeder Schneidenarm weist auf einer ersten Seite einen Schneidenabschnitt auf und auf einer zweiten Seite, die der ersten Seite gegenüberliegt, weist jeder Schneidenarm einen Verlängerungsarm auf. Zudem weist die Ablängeinheit einen Positionsarm auf, mit dem die Schneidenabschnitte in eine Arbeitsposition gebracht werden können. Dabei ist der Schneidenschwenkpunkt gegenüber dem Positionsarm ortsfest angeordnet.

Wird ein Leiterstück mittels der Ablängeinheit abgelängt, so ergibt sich nach dem Schneidvorgang eine Schnittkante, die innerhalb des Querschnitts des Leiterstücks liegt. Werden mehrere in einer Reihe angeordnete Leiterstücke mittels der Ablängeinheit abgelängt, so ergibt sich nach dem Schneidvorgang eine Schnittkante, die innerhalb des Querschnitts der abgelängten Leiterstücke liegt. Es kann also eine Gratbildung an der Außenseite eines Leiterstücks oder einer Leiterstückreihe verhindert werden. Dies ist insbesondere beim anschließenden Schweißvorgang vorteilhaft. Zudem wird eine mögliche Verletzungsgefahr an einem solchen Grat verhindert.

Da die Schneidbewegung der Schneidenabschnitte von zwei gegenüberliegenden Seiten her auf das Leiterstück oder die Leiterstückreihe einwirken, heben sich die seitlichen Krafteinwirkungen auf das Leiterstück bzw. die Leiterstückreihe auf. Damit wird eine einseitige Krafteinwirkung auf das Leiterstück bzw. die Leiterstückreihe verhindert. Ein mögliches, ungewolltes Verbiegen der Leiterstücke durch eine einseitige bzw. bzgl. der Längsachse asymmetrische Krafteinwirkung wird vermieden.

Eine einseitige Krafteinwirkung würde sich zudem über die Leiterstücke und den Statorkern auf die Aufnahme übertragen. Die Aufnahme müsste daher derart ausgebildet sein, dass sie dieser einseitigen Krafteinwirkung standhält und den Statorkern sicher und stabil in seiner Ausrichtung festhält. Dies ist konstruktiv aufwendig, weil beispielsweise zusätzliche Stabilisierungselemente angebracht werden müssen. Da durch die beiden gegeneinander bewegbaren Schneidenabschnitte der Ablängeinheit die einseitige Krafteinwirkung vermieden wird, kann die Aufnahme konstruktiv einfacher und/oder kompakter gestaltet werden.

Es ist denkbar, dass die Ablängeinheit mehrere jeweils paarweise ausgebildete Schneidenabschnitte (also zwei, vier, sechs, acht, usw.) aufweist. Dadurch, dass jeweils zwei Schneidenabschnitte beim Schneidvorgang zusammenwirken, ergeben sich die oben beschriebenen Vorteile bezüglich der Gratbildung und der einseitigen Krafteinwirkung.

Bevorzugterweise sind die Leiterstücke in Reihen im Statorkern angeordnet. Diese Leiterstückreihen sind auf Kreisbahnen, die in einer Umfangsrichtung des Statorkerns verlaufen, angeordnet und erstrecken sich entlang einer Radialrichtung des Statorkerns. Die aus dem Statorkern hinausragenden freien Enden der Leiterstücke erstrecken sich dabei entlang einer Längsrichtung des Statorkerns, die insbesondere der Richtung der Schwerkraft entspricht. So können insbesondere abgeschnittene Leiterstückteile in Richtung der Schwerkraft, also vom Statorkern weg, abfallen. Sie gelangen daher nicht in den Statorkern, wo sie eine Störstelle darstellen, einen Kurzschluss verursachen und/oder den Statorkern beispielsweise durch einen Aufprall beschädigen können.

Dabei ist mindestens eine Ablängeinheit derart ausgebildet und angeordnet, dass die Schneidenabschnitte entlang der Radialrichtung beim Durchführen eines Schneidvorgangs bewegt werden. So können mehrere Ablängeinheiten sternförmig um den Statorkern angeordnet werden, wobei diese gleichzeitig einen Schneidvorgang durchführen können. Der Gesamtprozess des Ablängens kann somit beschleunigt werden.

Mindestens eine Ablängeinheit kann derart ausgebildet und angeordnet sein, dass die Schneidenabschnitte entlang einer zur Radialrichtung senkrechten Richtung beim Durchführen eines Schneidvorgangs bewegt werden. Die zur Radialrichtung senkrechte Richtung entspricht einer Tangente an die Kreisbahn um den Mittelpunkt des Statorkerns, auf der das mindestens eine abzulängende Leiterstück angeordnet ist. Damit können auch einzelne oder mehrere Leiterstücke abgelängt werden, die sich innerhalb einer Leiterstückreihe befinden, d. h. weder das äußerste noch das innerste Leiterstück einer solchen Leiterstückreihe darstellen. Es ist somit möglich Leiterstücke innerhalb derselben Leiterstückreihe auf unterschiedliche Längen abzulängen.

Vorteilhafterweise kann die Ablängeinheit zwei Betätigungsarme umfassen. Diese sind in einem Anlenkpunkt miteinander verbunden und um einen gemeinsamen Betätigungsarmschwenkpunkt schwenkbar gelagert. Der Anlenkpunkt entspricht somit dem Betätigungsarmschwenkpunkt. Dabei ist der Anlenkpunkt insbesondere im Bereich eines jeweiligen ersten Endes des jeweiligen Betätigungsarms angeordnet. Jeder Betätigungsarm ist mit seinem jeweiligen zweiten Ende mit einer Betätigungseinheit wirkverbunden. Die Betätigungseinheit kann die zweiten Enden der Betätigungsarme relativ zueinander hin- und herbewegen, sodass die Betätigungsarme um den Anlenkpunkt bzw. Betätigungsarmschwenkpunkt gegeneinander verschwenkt werden können. Jeweils ein Schneidenarm ist an einem der Betätigungsarme in einem Verbindungspunkt verbunden. Jeder Schneidenarm kann um seinen Verbindungspunkt gegenüber dem Betätigungsarm geschwenkt werden.

Der Anlenkpunkt, also der Betätigungsarmschwenkpunkt, ist in dem Positionsarm mit einem translatorischen Freiheitsgrad geführt. Mit anderen Worten, der Betätigungsarmschwenkpunkt ist gegenüber dem Positionsarm, der zur Positionierung der Ablängeinheit gegenüber dem Stator dient, entlang des Freiheitsgrads bewegbar. Jedoch nicht frei, also nicht außerhalb des einen Freiheitsgrads, bewegbar.

Nach einer vorteilhaften Ausgestaltung ist die Betätigungseinheit als Druck-, Hydraulik-, Pneumatikzylinder, o. ä. ausgebildet. Es ist aber auch eine Betätigungseinheit denkbar, die auf einem anderen Prinzip, wie z. B. elektrisch, magnetisch, elektromechanisch, etc., basiert.

Bevorzugterweise kann der Anlenkpunkt aufgrund des translatorischen Freiheitsgrades gegenüber dem Positionsarm und insbesondere innerhalb des Positionsarmes auf einer Geraden hin- und herbewegt werden. Die Gerade entlang welcher der Anlenkpunkt bewegbar ist, verläuft insbesondere durch den Anlenkpunkt und den Schneidenschwenkpunkt. Die Schwenkachse des Anlenkpunkts kann dabei in einem Langloch des Positionsarms geführt sein. Während der Hin- und Herbewegung des Anlenkpunkts wird der Abstand zwischen Anlenkpunkt und Schneidenschwenkpunkt kleiner bzw. größer, da der Schneidenschwenkpunkt bezüglich des Positionsarmes fest ist.

Bevorzugt ist jeder Verbindungspunkt an einem Betätigungsarm zwischen dem Anlenkpunkt und einem Punkt, an dem der jeweilige Betätigungsarm mit der Betätigungseinheit verbunden ist, angeordnet. Mit anderen Worten, der Verbindungspunkt ist an dem jeweiligen Betätigungsarm zwischen dem ersten Ende und dem zweiten Ende des Betätigungsarmes angeordnet. In dem Verbindungspunkt ist jeweils ein Schneidenarm an dem entsprechenden Betätigungsarm schwenkbar gelagert angelenkt.

Nach einer vorteilhaften Ausgestaltung kann der Statorkern in der Aufnahme gegenüber der Ablängeinheit entlang der Umfangsrichtung rotiert werden (in der Aufnahme rotierbar oder die Aufnahme mit Statorkern gemeinsam rotierbar). Es kann aber auch die Ablängeinheit entlang der Umfangsrichtung und/oder Radialrichtung (über den Positionsarm) bewegt werden. Auch eine Überlagerung beider Bewegungen, Rotation des Statorkerns und Bewegung der Ablängeinheit, ist denkbar. So kann nach jedem Schneidvorgang der Statorkern und/oder die Ablängeinheit bewegt werden, so dass die Ablängeinheit in eine Position gebracht wird, in der das nächste Leiterstück bzw. die nächste Leiterstückreihe abgelängt werden kann. Bei einer Anordnung mehrerer Ablängeinheiten radial und/oder tangential zum Statorkern, können so mit wenigen Bewegungsschritten (Rotation des Statorkerns und/oder Bewegung einer Ablängeinheit) alle gewünschten Leiterstücke von einer Ablängeinheit erreicht und auf die gewünschte Länge abgelängt werden. Der Gesamtablängprozess wird dadurch beschleunigt.

Die Schneidenarme können jeweils einen Befestigungsabschnitt aufweisen. Der Befestigungsabschnitt erstreckt sich zwischen Schneidenarm und Schneidenschwenkpunkt. Der Schneidenabschnitt und der Verlängerungsarm eines Schneidenarms befinden sich auf der gleichen Seite einer Geraden, die durch den Anlenkpunkt und den Schneidenschwenkpunkt verläuft. Dies ist in einem geöffneten und/oder geschlossenen Zustand der Ablängeinheit der Fall.

Weiter bevorzugt ist die Ablängeinheit im Bereich der Schneidenabschnitte angefast. Die Ablängeinheit kann ebenso im Bereich einer Geraden, die durch den Anlenkpunkt und den Schneidenschwenkpunkt verläuft, angefast sein. Die Ablängeinheit kann aber auch überall angefast sein. Dabei sind die Fasen derart orientiert, dass keine in Bezug zur Schwerkraft senkrechten (horizontalen) flachen Ebenen vorhanden sind oder zumindest weitgehend vermieden sind. So können herabfallende (in Richtung Schwerkraft) Teile, wie beispielsweise abgeschnittene Leiterstückteile, an den Fasen entlang rutschen und von der Ablängeinheit abfallen. Dadurch kann gewährleistet werden, dass herabfallende bzw. abgeschnittene Teile nicht auf der Ablängeinheit liegen bleiben und beispielsweise bei einem nächsten Schneidvorgang und/oder Bewegungsprozess sich in der Ablängeinheit verklemmen. Dadurch können der Reinigungsaufwand und der Wartungsaufwand der Vorrichtung bzw. der Ablängeinheit reduziert werden.

Weiter bevorzugt ist die Ablängeinheit derart ausgebildet, dass eine Verbindungsgerade, die die einander zugewandten Schneidenabschnitte verbindet, und eine hierzu parallele Gerade durch den Anlenkpunkt beabstandet voneinander angeordnet sind. Dabei ist der Abstand zwischen der Verbindungsgeraden und der Geraden durch den Anlenkpunkt im geschlossenen Zustand der Ablängeinheit größer als im geöffneten Zustand der Ablängeinheit. Somit muss die Ablängeinheit nach dem Schneidvorgang nicht zurückgefahren werden, da die Schneidenabschnitte im geöffneten Zustand der Ablängeinheit sich von dem abgelängten Leiterstück wegbewegen. Dementsprechend bewegen sich die Schneidenabschnitte bei einem Schneidvorgang aufeinander und auf das abzulängende Leiterstück bzw. den Statorkern zu. Mit anderen Worten, bewegen sich die Schneidenabschnitte während eines Schneidvorgang entlang der Längsrichtung bei ortsfest gehaltenem Positionsarm.

Die Ablängeinheit kann daher nach dem Schneidvorgang ohne Wegbewegen von dem Leiterstück bzw. der Leiterstückreihe entlang der Längsrichtung (bzw. vor dem Schneidvorgang ohne Hinbewegen zu dem Leiterstück bzw. der Leiterstückreihe entlang der Längsrichtung) an das nächste Leiterstück bzw. die nächste Leiterstückreihe verfahren werden. Zumindest können aber die Bewegungen der Ablängeinheit während eines oder mehrerer Schneidvorgänge entlang der Längsrichtung reduziert werden. Dies reduziert die insgesamt benötigte Anzahl an Bewegungen in dem Gesamtablängprozess und beschleunigt diesen.

Bevorzugter Weise sind der Positionsarm, die Betätigungseinheit, die Schneidenarme, und/oder die Betätigungsarme im Wesentlichen in einer Ebene angeordnet.

Eine solche Anordnung führt zu einer kompakten und insbesondere schmalen Bauweise der Ablängeinheit. Insbesondere können mehrere Ablängeinheiten platzsparend radial (sternförmig) und/oder tangential an einem Statorkern angeordnet werden.

Es ist erfindungsgemäß vorgesehen, dass eine Betätigungseinheit, die als Hydraulik- oder Pneumatikzylinder ausgebildet ist, die Schneidenabschnitte mittels einer Ausfahrbewegung (Verlängerung der Betätigungseinheit bzw. Ausfahren eines Kolbens aus einem Zylinder) aufeinander zu und mittels einer Einfahrbewegung (Verkürzen der Betätigungseinheit bzw. Einfahren eines Kolbens in einen Zylinder) voneinander weg bewegt

Weitere Merkmale, Einzelheiten und Vorteile der Erfindung ergeben sich aus dem Wortlaut der Ansprüche sowie aus der folgenden Beschreibung des Ausführungsbeispiels anhand der Zeichnungen. Es zeigen:
- Fig. 1: eine Seitenansicht auf eine Ablängeinheit im geöffneten Zustand;
- Fig. 2: eine perspektivische Ansicht auf die Ablängeinheit gem. Fig. 1;
- Fig. 3: eine Seitenansicht auf die Ablängeinheit im geschlossenen Zustand;
- Fig. 4: eine perspektivische Ansicht auf die Ablängeinheit gem. Fig. 3;
- Fig. 5: eine Draufsicht auf die Ablängeinheit gem. Fig. 3 und
- Fig. 6: eine perspektivische Ansicht auf eine Anordnung mehrerer Ablängeinheiten.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

Die Vorrichtung 10 zum Ablängen von in einem Statorkern 12 aufgenommenen Leiterstücken 14 weist eine Aufnahme für den Statorkern 12 auf und mindestens eine Ablängeinheit 16.

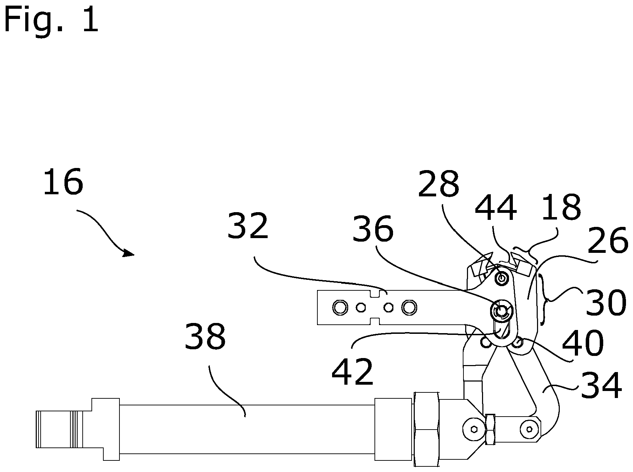

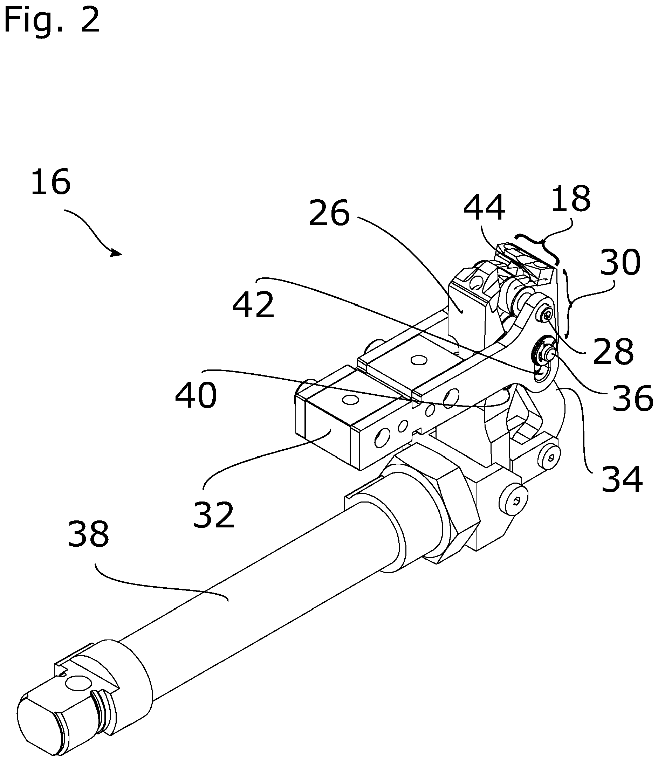

Eine Seitenansicht der Ablängeinheit 16 im geöffneten Zustand ist in Figur 1 dargestellt. Figur 2 zeigt eine perspektivische Ansicht auf die Ablängeinheit 16 gemäß Figur 1.

Die Ablängeinheit 16 weist zwei Schneidenabschnitte 18 auf. Diese sind zur Durchführung eines Schneidvorgangs aufeinander zu- und voneinander weg bewegbar. Durch einen Schneidvorgang kann ein Leiterstück 14 oder mehrere Leiterstücke 14 durch Abschneiden eines Teils des Leiterstückes 14 auf eine gewünschte Länge abgelängt werden.

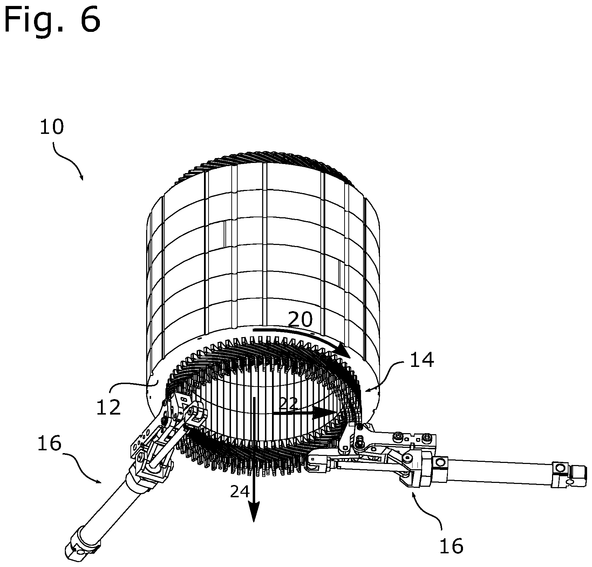

Die abzulängenden Leiterstücke 14 sind entlang einer Umfangsrichtung 20 verlaufenden Kreisbahnen in Reihen angeordnet, die jeweils in einer Radialrichtung 22 erstreckt sind. Die Leiterstücke 14 ragen mit ihren abzulängenden freien Enden aus dem Statorkern 12 entlang einer Längsrichtung 24 heraus (siehe hierzu Figur 6).

Die Ablängeinheit 16 umfasst des Weiteren zwei Schneidenarme 26 zu sehen. Diese sind über jeweils einen Befestigungsabschnitt 44 in einem gemeinsamen Schneidenschwenkpunkt 28 schwenkbar gelagert und miteinander verbunden. Jeder Schneidenarm 26 weist an seiner ersten Seite den Schneidenabschnitt 18 auf und auf seiner zweiten Seite, die der ersten Seite gegenüberliegt, einen Verlängerungsarm 30 auf.

Die Ablängeinheit 16 weist einen Positionsarm 32 auf. Mit dem Positionsarm 32 kann die Ablängeinheit 16 und können insbesondere die Schneidenabschnitte 18 in eine Arbeitsposition bewegt werden, in der ein Schneidvorgang durchgeführt werden kann.

Die Schneidenarme 26 werden mittels zweier Betätigungsarme 34 um den Schneidenschwenkpunkt 28 geschwenkt.

Die beiden Betätigungsarme 34 sind mit jeweils einem ersten Ende in einem Anlenkpunkt 36 miteinander verbunden und um diesen schwenkbar gelagert. Der Anlenkpunkt 36 stellt somit den Betätigungsarmschwenkpunkt der beiden Betätigungsarme 34 dar. Der Anlenkpunkt 36 bzw. dessen Schwenkachse ist innerhalb eines Langlochs 42, welches in dem Positionsarm 32 angeordnet ist, geführt.

Mit jeweils einem zweiten Ende sind die beiden Betätigungsarme 34 mit einer Betätigungseinheit 38 wirkverbunden. In diesem Ausführungsbeispiel ist die Betätigungseinheit 38 in Form eines Pneumatikzylinders ausgestaltet. Es kann auch vorgesehen sein, dass die Betätigungseinheit 38 direkt mit den Schneidenarmen 26 wirkverbunden ist, ohne Zwischenschaltung der Betätigungsarme 34, welche jedoch eine Hebelübersetzung für die Betätigungseinheit 38 bilden. In diesem Fall ist insbesondere vorgesehen, dass die Verlängerungsarm 30 quasi über den Schneidenschwenkpunkt 28 über Kreuz geführt sind, so dass die Betätigungseinheit 38, die als Hydraulikzylinder ausgebildet ist, die Schneidenabschnitte 18 mittels einer Ausfahrbewegung aufeinanderzu bewegt.

Generell ist erfindungsgemäß vorgesehen, dass eine Betätigungseinheit 38, die als Hydraulik- oder Pneumatikzylinder ausgebildet ist, die Schneidenabschnitte 18 mittels einer Ausfahrbewegung (Verlängerung der Betätigungseinheit bzw. Ausfahren eines Kolbens aus einem Zylinder) aufeinander zu und mittels einer Einfahrbewegung (Verkürzen der Betätigungseinheit bzw. Einfahren eines Kolbens in einen Zylinder) voneinander weg bewegt.

Die Schneidenarme 26 sind mit den Betätigungsarmen 34 jeweils in einem Verbindungspunkt 40 verbunden und um diesen Verbindungspunkt 40 schwenkbar gelagert.

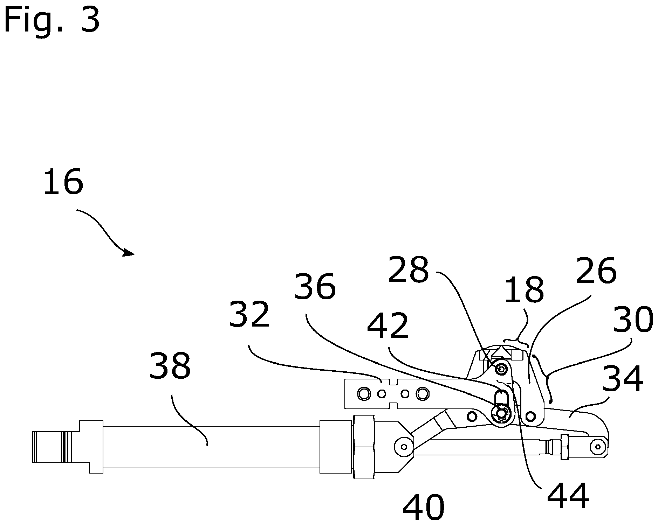

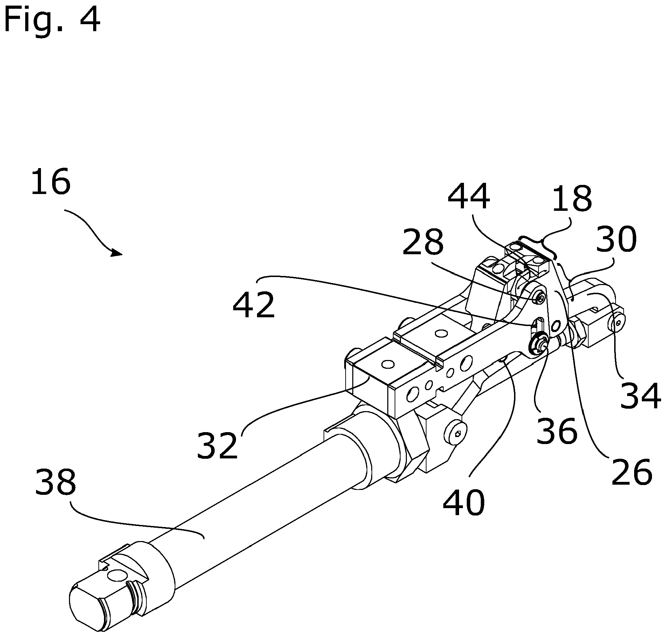

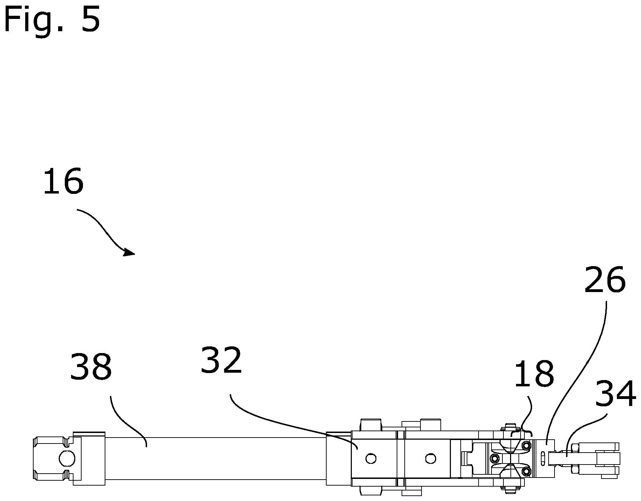

Zur Durchführung eines Schneidvorgangs wird die Ablängeinheit 16 aus dem Figur 1 und Figur 2 gezeigten geöffneten Zustand in einen geschlossenen Zustand überführt. In den Figuren 3 bis 5 ist die Ablängeinheit 16 in einem geschlossenen Zustand abgebildet, wobei Figur 3 eine Seitenansicht, Figur 4 eine perspektivische Ansicht und Figur 5 eine Draufsicht der Ablängeinheit 16 zeigt.

Der Schneidvorgang wird durchgeführt, indem im geöffneten Zustand der Ablängeinheit 16 die Betätigungseinheit 38 die beiden zweiten Enden der Betätigungsarme 34 in einer Relativbewegung auseinander bewegt. Während dieser Relativbewegung der Bewegungsarme 34 bewegt sich der Anlenkpunkt 36 innerhalb des Langlochs 42 von einem ersten Ende des Langlochs 42, in welchem der Anlenkpunkt 36 sich im geöffneten Zustand der Ablängeinheit 16 befindet (siehe Figur 1), zu einem zweiten Ende des Langlochs 42, in welchem der Anlenkpunkt 36 sich im geschlossenen Zustand der Ablängeinheit 16 befindet (siehe Figur 3). Der Anlenkpunkt 36 wandert quasi innerhalb des Langlochs 42 in Figur 1 von oben nach unten.

Die Relativbewegung der Bewegungsarme 34 zwingt die beiden Verbindungspunkte 40 auseinander. Damit wird der Schwenkvorgang der Schneidenarme 26 eingeleitet. Dabei bewegen sich die Schneidenarme 26 um den Schneidenschwenkpunkt 28, sodass sich die Schneidenabschnitte 18 aufeinander zu bewegen, bis der in Figuren 3 bis 5 gezeigte, geschlossene Zustand der Ablängeinheit 16 erreicht ist.

Durch eine so erreichte doppelte Übersetzung der Kraft, nämlich über die Betätigungsarme 34 und die Schneidenarme 26, wird eine vergleichsweise geringe Kraft der Betätigungseinheit 38 benötigt um eine vergleichsweise hohe Schneidkraft der Schneidenabschnitte 18 zu erreichen. Da die Betätigungseinheit 38 weniger Kraft aufbringen muss, kann sie kleiner bzw. kompakter ausgestaltet werden.

Das Öffnen der Ablängeinheit 16 geschieht analog, indem die Betätigungseinheit 38 die beiden zweiten Enden der Betätigungsarme 34 in einer Relativbewegung wieder zueinander bewegt. Der Anlenkpunkt 36 wandert entlang des Langenlochs 42 in Figur 3 von unten nach oben. Die Verbindungspunkte 40 bewegen sich aufeinander zu und die Schneidenarme 26 schwenken um den Schneidenschwenkpunkt 28 auseinander, sodass die Schneidenabschnitte 18 sich voneinander wegbewegen.

Die Bewegung der Schneidenabschnitte 18 ist eine Überlagerung von Bewegungen in zwei senkrecht zu einander verlaufenden Richtungen. Zum einen bewegen sich die Schneidenabschnitte 18 aufeinander zu und wieder voneinander weg. Zum anderen bewegen sich die Schneidenabschnitte 18 bedingt durch die dargestellte Mechanik und den Bewegungsapparat zusätzlich parallel zu einer Geraden, die durch den Anlenkpunkt 16 und den Schneidenschwenkpunkt 28 verläuft. Somit bewegen sich die Schneidenabschnitte 18 während des Schneidvorgangs auf das abzulängende Leiterstück 14 (oder mehrere Leiterstücke 14) bzw. den Statorkern 12 zu und bewegen sich nach dem Schneidvorgang, beim Öffnen der Ablängeinheit 16, von dem abgelängten Leiterstück 14 (oder mehreren Leiterstücken 14) bzw. dem Statorkern 12 weg.

In dem dargestellten Ausführungsbeispiel weist die Ablängeinheit 16 verschiedene schräge Flächen auf. So sind beispielsweise die Schneidenabschnitte 18 teilweise angefast ausgestaltet, wie insbesondere in Figuren 2, 4 und 5 zu sehen ist. Mögliche herabfallende Teile, z. B. abgeschnittene Leiterstückteile, sollen an den schrägen Flächen abrutschen und an der Ablängeinheit 16 und/oder durch die Ablängeinheit 16 hindurch fallen. Sie sollen nicht an der Ablängeinheit 16 haften oder liegen bleiben, sodass die Funktion und insbesondere der Bewegungsapparat der Ablängeinheit 16 nicht gestört oder gar beschädigt wird.

Figur 6 zeigt eine perspektivische Ansicht auf eine Anordnung mehrerer Ablängeinheiten 16. Dadurch, dass die Ablängeinheit 16 eine kompakte Bauweise und insbesondere eine schmale Bauweise aufweist, können mehrere Ablängeinheiten 16 platzsparend um den Statorkern 12 angeordnet werden.

Eine erste Ablängeinheit 16 ist entlang der Radialrichtung 22 angeordnet. Die Schneidenabschnitte 18 der ersten Ablängeinheit 16 bewegen sich somit ebenfalls in radialer Richtung. Damit kann ein Leiterstück 14 aber auch eine komplette in radialer Richtung erstreckte Leiterstückreihe durch einen einzigen Schneidvorgang abgelängt werden.

Eine zweite Ablängeinheit 16 ist senkrecht zur ersten Ablängeinheit 16, also senkrecht zur Radialrichtung 22, ausgerichtet (tangentiale Ausrichtung). Die Schneidenabschnitte 18 der zweiten Ablängeinheit 16 bewegen sich somit ebenfalls senkrecht zur radialen Richtung (tangential zur Umfangsrichtung 20). Damit kann ein Leiterstück 14 oder mehrere Leiterstücke 14, insbesondere innerhalb einer radial erstreckten Leiterstückreihe, abgelängt werden. So können beispielsweise Leiterstücke 14 innerhalb derselben Leiterstückreihe auf unterschiedliche Längen abgelängt werden.

## Patentansprüche

1. Vorrichtung (10) zum Ablängen von in einem Statorkern (12) aufgenommenen Leiterstücken (14) mit
einer Aufnahme für den Statorkern (12) mit den darin aufgenommenen Leiterstücken (14), deren freie Enden im aufgenommenen Zustand aus dem Statorkern (12) hinausragen,
und mindestens einer Ablängeinheit (16),
die mindestens zwei Schneidenabschnitte (18) umfasst, die
derart ausgebildet und angeordnet sind, dass sie aufeinander zu bewegbar sind, um bei einem Schneidvorgang von zwei gegenüberliegenden Seiten her auf mindestens ein abzulängendes Leiterstück (14) und dessen Längsachse schneidend einzuwirken, **dadurch gekennzeichnet, dass** die Ablängeinheit (16)
zwei Schneidenarme (26) umfasst, die in einem gemeinsamen Schneidenschwenkpunkt (28) schwenkbar gelagert miteinander verbunden angeordnet sind, wobei die Schneidenarme (26) auf einer ersten Seite je einen der Schneidenabschnitte (18) und auf einer dem Schneidenabschnitt (18) gegenüberliegenden zweiten Seite je einen Verlängerungsarm (30) aufweisen, und einen Positionsarm (32) mittels dem die Schneidenabschnitte (18) in eine Arbeitsposition bringbar sind, wobei der Schneidenschwenkpunkt (28) in seiner Position gegenüber dem Positionsarm (32) festgelegt ist.

2. Vorrichtung (10) nach Anspruch 1, **dadurch gekennzeichnet, dass** die Leiterstücke (14) auf mehreren in einer Umfangsrichtung (20) verlaufenden Kreisbahnen in Reihen, die jeweils in einer Radialrichtung (22) erstreckt sind, angeordnet sind und entlang einer Längsrichtung (24), die insbesondere der Richtung der Schwerkraft entspricht, aus dem Statorkern (12) hinausragen, wobei mindestens eine Ablängeinheit (16) derart ausgebildet und angeordnet ist, dass die Bewegung der Schneidenabschnitte (18) bei einem Schneidvorgang entlang der Radialrichtung (22) erfolgt
und/oder
mindestens eine Ablängeinheit (16) derart ausgebildet und angeordnet ist, dass die Bewegung der Schneidenabschnitte (18) entlang einer zur Radialrichtung (22) orthogonalen Richtung erfolgt.

3. Vorrichtung (10) nach Anspruch 1 oder 2, **dadurch gekennzeichnet, dass** die Ablängeinheit (16) weiter umfasst: zwei Betätigungsarme (34), die in einem Anlenkpunkt (36), insbesondere der im Bereich eines jeweiligen ersten Endes des jeweiligen Betätigungsarms (34) liegt, je um einen gemeinsamen Betätigungsarmschwenkpunkt schwenkbar gelagert miteinander verbunden angeordnet sind und mit ihrem jeweiligen zweiten Ende mit einer Betätigungseinheit (38) wirkverbunden sind,
wobei die Betätigungseinheit (38) ausgebildet ist die zweiten Enden der Betätigungsarme (34) relativ zueinander zu bewegen, und so die Betätigungsarme (34) um den Betätigungsarmschwenkpunkt gegeneinander zu verschwenken,
wobei je ein Schneidenarm (26) an einem der Betätigungsarme (34) in einem Verbindungspunkt (40) schwenkbar gelagert angelenkt ist,
und der Anlenkpunkt (36) in dem Positionsarm (32) mit einem translatorischen Freiheitsgrad geführt ist.

4. Vorrichtung (10) nach Anspruch 3, **dadurch gekennzeichnet, dass** die Betätigungseinheit (38) in Form eines Druck-, Hydraulik- oder Pneumatikzylinders ausgebildet ist.

5. Vorrichtung (10) nach Anspruch 3 oder Anspruch 4, **dadurch gekennzeichnet, dass** der translatorische Freiheitsgrad des Anlenkpunkts (36) eine Verschiebung des Anlenkpunkts (36) gegenüber dem Positionsarm (32) entlang einer Geraden, die durch den Anlenkpunkt (36) und den Schneidenschwenkpunkt (28) verläuft, ermöglicht, insbesondere wobei eine Schwenkachse des Anlenkpunkts (36) in einem Langloch (42) des Positionsarms (32) geführt ist.

6. Vorrichtung (10) nach einem der Ansprüche 3 bis 5, **dadurch gekennzeichnet, dass** der Verbindungspunkt (40), in dem ein jeweiliger Schneidenarm (26) an dem entsprechenden Betätigungsarm (34) schwenkbar gelagert angelenkt ist, entlang der Erstreckung des jeweiligen Betätigungsarms (34) je zwischen dem Anlenkpunkt (36) und einem Punkt der Wirkverbindung mit der Betätigungseinheit (38) angeordnet ist.

7. Vorrichtung (10) nach einem der Ansprüche 2 bis 6, **dadurch gekennzeichnet, dass** der Statorkern (12) in der Aufnahme gegenüber der Ablängeinheit (16) entlang der Umfangsrichtung (20) rotierbar ist und/oder die Ablängeinheit (16) entlang der Umfangsrichtung (20) und/oder Radialrichtung (22) bewegbar ist.

8. Vorrichtung (10) nach einem der Ansprüche 1 bis 7, **dadurch gekennzeichnet, dass** die Schneidenarme (26) je einen zum Schneidenschwenkpunkt (28) erstreckten Befestigungsabschnitt (44) umfassen, in dem sie am Schneidenschwenkpunkt (28) anglenkt sind,
wobei in einem geöffneten Zustand der Ablängeinheit (16) der Schneidenabschnitt (18) und der Verlängerungsarm (30) des gleichen Schneidenarms (26) auf der gleichen Seite bezüglich der Geraden, die durch den Anlenkpunkt (36) und den Schneidenschwenkpunkt (28) verläuft, angeordnet sind
und/oder
wobei in einem geschlossenen Zustand der Ablängeinheit (16) der Schneidenabschnitt (18) und der Verlängerungsarm (30) des gleichen Schneidenarms (26) auf der gleichen Seite bezüglich der Geraden, die durch den Anlenkpunkt (36) und den Schneidenschwenkpunkt (28) verläuft, angeordnet sind.

9. Vorrichtung (10) nach einem Ansprüche 3 bis 8, **dadurch gekennzeichnet, dass** die Ablängeinheit (16) im Bereich der Schneidenabschnitte (18), insbesondere im Bereich einer Geraden, die durch den Anlenkpunkt (36) und den Schneidenschwenkpunkt (28) verläuft, und insbesondere überall, in Richtung der Schwerkraft angefast ist, sodass keine in Bezug zur Schwerkraft senkrechte, ebene Flächen vorhanden sind, an denen insbesondere abgeschnittene Leiterstückteile liegen bleiben können.

10. Vorrichtung (10) nach einem der Ansprüche 3 bis 9, **dadurch gekennzeichnet, dass** die Ablängeinheit (16) derart ausgestaltet ist, dass eine Verbindungsgerade, die die einander zugewandten Enden der Schneidenabschnitte (18) verbindet, einen Abstand zu einer Geraden aufweist, die durch den Anlenkpunkt (36) verläuft und parallel zur Verbindungsgeraden ist, wobei der Abstand zwischen der Verbindungsgeraden und der Geraden durch den Anlenkpunkt (36) im geschlossenen Zustand der Ablängeinheit (16) größer ist als im geöffneten Zustand der Ablängeinheit (16).

11. Vorrichtung (10) nach einem der Ansprüche 3 bis 10, **dadurch gekennzeichnet, dass** der Positionsarm (32), die Betätigungseinheit (38), die Schneidenarme (26) und/oder die Betätigungsarme (34) im Wesentlichen in einer Ebene angeordnet sind.

## Claims

1. Device (10) for trimming conductor pieces (14) inserted in a stator core (12) with
a seat for the stator core (12) with the conductor pieces (14) inserted therein, the free ends of which protrude from the stator core (12) in the inserted condition,
and at least one trimming unit (16),
which comprises at least two blade sections (18), which
are configured and arranged in such a way that they can be moved towards one another to act in a cutting manner during a cutting process from two opposite sides upon at least one conductor piece (14) to be trimmed and its longitudinal axis, **characterized in that** the trimming unit (16)
comprises two blade arms (26) which are connected to one another pivotably supported at a common blade pivot point (28), wherein the blade arms (26) each have on a first side one of the blade sections (18) and on a second side opposite to the blade section (18) an extension arm (30) as well as a positioning arm (32), by means of which the blade sections (18) can be brought in an operating position, wherein the blade pivot point (28) has a fixed position with respect to the positioning arm (32).

2. Device (10) as claimed in claim 1, **characterized in that** the conductor pieces (14) are arranged in rows, which extend each in a radial direction (22), on several circuits extending in a circumferential direction (20), and protrude from the stator core (12) along a longitudinal direction (24) corresponding particularly to the direction of gravity, wherein at least one trimming unit (16) is configured and arranged in such a way that the movement of the blade sections (18) during a cutting operation is performed along the radial direction (22)
and/or
at least one trimming unit (16) is configured and arranged in such a way that the movement of the blade portions (18) is performed along a direction orthogonal to the radial direction (22) .

3. Device (10) as claimed in claim 1 or 2, **characterized in that** the trimming unit (16) further comprises: two operating arms (34) which are arranged each supported pivotably around a common operating arm pivot point and connected to one another at a linkage point (36) which is situated particularly in the area of a respective first end of the respective operating arm (34), and which are operatively connected with their respective second end to an actuating unit (38),
wherein the actuating unit (38) is configured to move the second ends of the operating arms (34) relative to one another and thus to pivot the operating arms (34) around the operating arm pivot point against each other,
wherein each blade arm (26) is linked pivotably supported to a respective operating arm (34) at a linkage point (40),
and the linkage point (36) is guided in the positioning arm (32) with a translational degree of freedom.

4. Device (10) as claimed in claim 3, **characterized in that** the actuating unit (38) is in the form of a pressure, hydraulic or pneumatic cylinder.

5. Device (10) as claimed in claim 3 or claim 4, **characterized in that** the translational degree of freedom of the linkage point (36) allows a sliding of the linkage point (36) with respect to the positioning arm (32) along a straight line extending through the linkage point (36) and the blade pivot point (28), wherein particularly a pivot axis of the linkage point (36) is guided in an oblong hole (42) of the positioning arm (32).

6. Device (10) as claimed in one of claims 3 to 5, **characterized in that** the linkage point (40) where a respective blade arm (26) is linked pivotably supported to the respective operating arm (34), is each arranged along the extension of the respective operating arm (34) between the linkage point (36) and a point of operative connection with the actuating unit (38).

7. Device (10) as claimed in one of claims 2 to 6, **characterized in that** the stator core (12) is rotatable in the seat with respect to the trimming unit (16) along the circumferential direction (20) and/or the trimming unit (16) is movable along the circumferential direction (20) and/or radial direction (22).

8. Device (10) as claimed in one of claims 1 to 7, **characterized in that** the blade arms (26) each comprise a mounting section (44) extending to the blade pivot point (28) where they are linked to the blade pivot point (28),
wherein the blade section (18) and the extension arm (30) of the same blade arm (26) are arranged on the same side with respect to the straight line extending through the linkage point (36) and the blade pivot point (28), when the trimming unit (16) is in its open state,
and/or
wherein the blade section (18) and the extension arm (30) of the same blade arm (26) are arranged on the same side with respect to the straight line extending through the linkage point (36) and the blade pivot point (28), when the trimming unit (16) is in its closed state.

9. Device (10) as claimed in one of claims 3 to 8, **characterized in that** the trimming unit (16) is beveled in the region of the blade sections (18), in particular in the region of a straight line extending through the linkage point (36) and the blade pivot point (28), and in particular everywhere in the direction of gravity, so that there are no flat surfaces extending orthogonal in relation to gravity on which bits of conductor pieces could remain.

10. Device (10) as claimed in one of claims 3 to 9, **characterized in that** the trimming unit (16) is configured in such a way that a straight connecting line which connects the ends of the blade sections (18) facing one another has a distance to a straight line extending through the linkage point (36) and parallel to the straight connecting line, wherein the distance between the straight connecting line and the straight line through the linkage point (36) is greater in the closed state of the trimming unit (16) than in the open state of the trimming unit (16).

11. Device (10) as claimed in one of claims 3 to 10, **characterized in that** the positioning arm (32), the actuating unit (38), the blade arms (26) and/or the operating arms (34) are arranged substantially in one plane.

## Revendications

1. Dispositif (10) pour mettre à longueur des pièces conductrices (14) reçues dans un noyau statorique (12) avec
un logement pour le noyau statorique (12) avec les pièces conductrices (14) reçues dans celui-ci, dont les extrémités libres font saillie du noyau statorique (12) dans l'état reçu,
et au moins une unité de mise à longueur (16),
qui comprend au moins deux parties de coupe (18), qui sont réalisées et disposées de telle sorte qu'elles peuvent se déplacer l'une vers l'autre, afin lors d'un processus de coupe d'exercer une action de coupe à partir de deux faces opposées sur au moins une pièce conductrice (14) à mettre à longueur et l'axe longitudinal de celle-ci, **caractérisé en ce que** l'unité de mise à longueur (16)
comprend deux bras de coupe (26), qui sont disposés reliés l'un à l'autre montés pivotants dans un point de pivotement de coupe (28) commun, dans lequel les bras de coupe (26) présentent sur une première face respectivement une des parties de coupe (18) et sur une deuxième face opposée à la partie de coupe (18) respectivement un bras de rallonge (30), et un bras de positionnement (32) au moyen duquel les parties de coupe (18) peuvent être amenées dans une position de travail, dans lequel le point de pivotement de coupe (28) est fixé dans sa position par rapport au bras de positionnement (32) .

2. Dispositif (10) selon la revendication 1, **caractérisé en ce que** les pièces conductrices (14) sont disposées sur plusieurs trajectoires circulaires s'étendant dans une direction périphérique (20) en rangées, qui sont étendues respectivement dans une direction radiale (22) et font saillie du noyau statorique (12) le long d'une direction longitudinale (24), qui correspond en particulier à la direction de la pesanteur, dans lequel au moins une unité de mise à longueur (16) est réalisée et disposée de telle sorte que le mouvement des parties de coupe (18) s'effectue le long de la direction radiale (22) lors d'un processus de coupe
et/ou
au moins une unité de mise à longueur (16) est réalisée et disposée de telle sorte que le mouvement des parties de coupe (18) s'effectue le long d'une direction perpendiculaire à la direction radiale (22).

3. Dispositif (10) selon la revendication 1 ou 2, **caractérisé en ce que** l'unité de mise à longueur (16) comprend en outre : deux bras d'actionnement (34), qui sont disposés reliés l'un à l'autre montés de façon à pouvoir pivoter respectivement autour d'un point de pivotement de bras d'actionnement commun dans un point d'articulation (36), en particulier qui se situe dans la zone d'une première extrémité respective du bras d'actionnement (34) respectif et avec leur deuxième extrémité respective sont en liaison fonctionnelle avec une unité d'actionnement (38),
dans lequel l'unité d'actionnement (38) est réalisée pour déplacer les deuxièmes extrémités des bras d'actionnement (34) l'une par rapport à l'autre, et ainsi pour faire pivoter mutuellement les bras d'actionnement (34) autour du point de pivotement de bras d'actionnement,
dans lequel respectivement un bras de coupe (26) est articulé sur un des bras d'actionnement (34) de manière montée pivotante dans un point de liaison (40),
et le point d'articulation (36) est guidé dans le bras de positionnement (32) avec un degré de liberté en translation.

4. Dispositif (10) selon la revendication 3, **caractérisé en ce que** l'unité d'actionnement (38) est réalisée sous forme d'un cylindre de pression, hydraulique ou pneumatique.

5. Dispositif (10) selon la revendication 3 ou revendication 4, **caractérisé en ce que** le degré de liberté en translation du point d'articulation (36) permet un déplacement du point d'articulation (36) par rapport au bras de positionnement (32) le long d'une droite, qui s'étend à travers le point d'articulation (36) et le point de pivotement de coupe (28), en particulier dans lequel un axe de pivotement du point d'articulation (36) est guidé dans un trou oblong (42) du bras de positionnement (32).

6. Dispositif (10) selon l'une quelconque des revendications 3 à 5, **caractérisé en ce que** le point de liaison (40), dans lequel un bras de coupe (26) respectif est articulé monté pivotant sur le bras d'actionnement (34) correspondant, est disposé le long de l'étendue du bras d'actionnement (34) respectif respectivement entre le point d'articulation (36) et un point de la liaison fonctionnelle avec l'unité d'actionnement (38).

7. Dispositif (10) selon l'une quelconque des revendications 2 à 6, **caractérisé en ce que** le noyau statorique (12) peut être amené en rotation dans le logement par rapport à l'unité de mise à longueur (16) le long de la direction périphérique (20) et/ou l'unité de mise à longueur (16) peut être déplacée le long de la direction périphérique (20) et/ou direction radiale (22).

8. Dispositif (10) selon l'une quelconque des revendications 1 à 7, **caractérisé en ce que** les bras de coupe (26) comprennent respectivement une partie de fixation (44) étendue vers le point de pivotement de coupe (28), dans laquelle ils sont articulés sur le point de pivotement de coupe (28),
dans lequel dans un état ouvert de l'unité de mise à longueur (16) la partie de coupe (18) et le bras de rallonge (30) du même bras de coupe (26) sont disposés sur la même face par rapport à la droite qui s'étend à travers le point d'articulation (36) et le point de pivotement de coupe (28),
dans lequel dans un état fermé de l'unité de mise à longueur (16) la partie de coupe (18) et le bras de rallonge (30) du même bras de coupe (26) sont disposés sur la même face par rapport à la droite qui s'étend à travers le point d'articulation (36) et le point de pivotement de coupe (28).

9. Dispositif (10) selon l'une quelconque des revendications 3 à 8, **caractérisé en ce que** l'unité de mise à longueur (16) est chanfreinée dans la zone des parties de coupe (18), en particulier dans la zone d'une droite qui s'étend à travers le point d'articulation (36) et le point de pivotement de coupe (28), et en particulier partout en direction de la pesanteur, de sorte qu'aucune surface plane perpendiculaire à la pesanteur, sur laquelle en particulier des morceaux découpés de pièces conductrices peuvent rester, n'est présente.

10. Dispositif (10) selon l'une quelconque des revendications 3 à 9, **caractérisé en ce que** l'unité de mise à longueur (16) est conçue de telle sorte qu'une droite de liaison, qui relie les extrémités tournées l'une vers l'autre des parties de coupe (18), présente une distance par rapport à une droite qui s'étend à travers le point d'articulation (36) et est parallèle aux droites de liaison, dans lequel la distance entre les droites de liaison et la droite à travers le point d'articulation (36) dans l'état fermé de l'unité de mise à longueur (16) est plus grande que dans l'état ouvert de l'unité de mise à longueur (16).

11. Dispositif (10) selon l'une quelconque des revendications 3 à 10, **caractérisé en ce que** le bras de positionnement (32), l'unité d'actionnement (38), les bras de coupe (26) et/ou les bras d'actionnement (34) sont disposés sensiblement dans un plan.
